Europäisches Patentamt

European Patent Office

Office européen des brevets

(11) Veröffentlichungsnummer : **0 446 588 B1**

(12) **EUROPÄISCHE PATENTSCHRIFT**

(45) Veröffentlichungstag der Patentschrift :
**20.09.95 Patentblatt 95/38**

(21) Anmeldenummer : **91101066.8**

(22) Anmeldetag : **28.01.91**

(51) Int. Cl.⁶ : **G21K 4/00,** C09K 11/84,
C09K 11/02

(54) **Ausgangsleuchtschirm für einen Röntgenbildverstärker.**

(30) Priorität : **09.03.90 EP 90104518**

(43) Veröffentlichungstag der Anmeldung :
**18.09.91 Patentblatt 91/38**

(45) Bekanntmachung des Hinweises auf die
Patenterteilung :
**20.09.95 Patentblatt 95/38**

(84) Benannte Vertragsstaaten :
**DE FR**

(56) Entgegenhaltungen :
**EP-A- 0 011 909**
**EP-A- 0 092 240**
**EP-A- 0 097 377**
**EP-A- 0 217 338**
**EP-A- 0 282 803**
**US-H- 901 019**

(73) Patentinhaber : **SIEMENS
AKTIENGESELLSCHAFT
Wittelsbacherplatz 2
D-80333 München (DE)**

(72) Erfinder : **Knüpfer, Wolfgang, Dr.phys.
Rudelsweiherstrasse 11
W-8520 Erlangen (DE)**
Erfinder : **Mika, Norbert, Dr.
Am Eichengarten 9
W-8521 Buckenhof (DE)**
Erfinder : **Mengel, Monika, Dr.-chem.
Lerchenbühl 9c
W-8520 Erlangen (DE)**

## Beschreibung

Die Erfindung betrifft einen Ausgangsleuchtschirm für einen Röntgenbildverstärker, der die von einer Photokathode ausgehenden Photoelektronen in ein sichtbares Bild umsetzt, mit einem Träger, auf dem ein in ein Bindemittel eingebetteter Leuchtstoff aufgebracht ist.

Üblicherweise werden in den Ausgangsleuchtschirmen von Röntgenbildverstärkern kathodolumineszierende Leuchtstoffe auf der Basis von Zinkcadmiumsulfid (ZnCdS:Ag) eingesetzt, die das durch das Röntgenstrahlenrelief übermittelte Intensitätsmuster der von der Photokathode ausgehenden Photoelektronen in ein sichtbares Bild umsetzen sollen. Dabei wird neben einer hohen Lichtausbeute pro absorbiertem Elektron möglichst wenig Eigenrauschen, bedingt durch den Aufbau des Schirmes aus einzelnen Körnern, und hohe Bildschärfe gefordert.

In der US-H-901 019 ist eine Röntgenverstärkerfolie beschrieben, bei der ein mit Gadolinium aktivierter Yttriumoxid-Leuchtstoff ($Y_2O_3$:Gd) Verwendung finden kann. Dieser Leuchtstoff ist in ein Bindemittel eingebettet und auf einen Träger aufgetragen.

Aus der EP-A-97 377 und der EP-A-282 803 ist die Verwendung eines mit Terbium aktivierten Gadoliniumoxisulfid-Leuchtstoffes ($Gd_2O_2S$:Tb) für Röntgenverstärkerfolien bekannt, bei denen der Leuchtstoff in einem auf einem Träger aufgetragenen Bindemittel eingebettet ist. Weiterhin ist in der EP-A-11 909 ein Leuchtstoff für eine Röntgenverstärkerfolie beschrieben, der aus Yttriumtantalat ($YTaO_4$:Gd) bestehen kann.

Die Erfindung geht von der Aufgabe aus, einen Ausgangsleuchtschirm der eingangs genannten Art zu schaffen, der dichtgepackte Leuchtstoffschichten und kurze Sedimentationszeiten ermöglicht und bei dem nach Elektroneneinstrahlung das ortsfeste Rauschen minimiert und die Ortsauflösung erhöht ist.

Die Aufgabe ist erfindungsgemäß dadurch gelöst, daß der Leuchtstoff aus einem Leuchtstoff mit hoher Dichte von >5 g/cm³ besteht. Die hohe Dichte führt zu akzeptablen Sinkgeschwindigkeiten bei der Sedimentation von den feinen Leuchtstoffpartikeln. Störungen der Sedimentation, z.B. durch Konvektionsströmungen, werden dadurch entscheidend verringert. Diese Leuchtstoffe senden grünes bis blauviolettes Licht aus. Ausgangsleuchtschirme mit diesem Leuchtstoff zeichnen sich durch geringe Körnigkeit (Eigenrauschen) und hohe Bildschärfe bei hoher Lichtausbeute aus. Die bei der Sedimentation verwendeten Leuchtstoffe und Glassubstrate zeigen im Gegensatz zu dem üblich verwendeten ZnCdS:Ag-Leuchtstoff ein besseres Verhalten bezüglich Verfärbung, das durch Dauerbelastung mit Kathodenstrahlen verursacht wird. Als vorteilhafte Leuchtstoffe lassen sich Yttriumtantalat ($YTaO_4$) oder Lanthanoxisulfid ($La_2O_2S$) und Gadoliniumoxisulfid ($Gd_2O_2S$) verwenden, die mit Terbium (Tb) dotiert sein können.

Es hat sich als vorteilhaft erwiesen, wenn die mittlere Korngröße des Leuchtstoffes zwischen 1,7 μm und 2,2 μm liegt, wobei nicht mehr als 15%, vorzugsweise 10%, der Körner des Leuchtstoffes größer als 3,5 μm und 85% bis 95%, vorzugsweise 90%, größer als 1,1 μm sind. Das von dem Leuchtstoff emittierte Licht wird auf Richtung des Ausganges des Röntgenbildverstärkers reflektiert, wenn die Leuchtstoffschicht durch eine Aluminiumschicht abgedeckt ist. Es hat sich als vorteilhaft erwiesen, wenn die Körner des Leuchtstoffes mit einer Schicht aus Aluminium- oder Siliziumoxid ($Al_2O_3$ oder $SiO_2$) versehen sind (coating).

Die Erfindung ist nachfolgend anhand eines in der Figur dargestellten Ausführungsbeispieles näher erläutert. Es zeigen:

FIG 1      den Aufbau eines erfindungsgemäßen Ausgangsleuchtschirmes und

FIG 2      die Korngrößenverteilung des erfindungsgemäßen Leuchtstoffes.

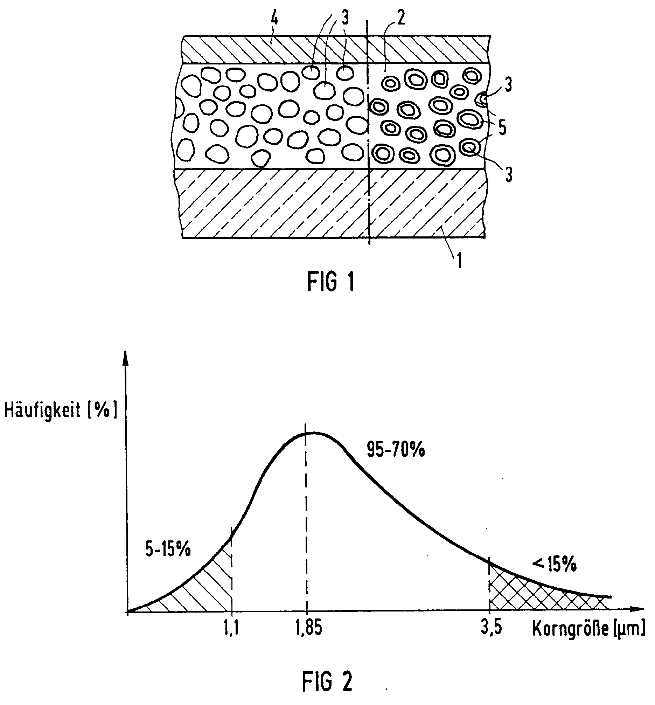

In FIG 1 ist ein Träger 1 für einen Ausgangsleuchtschirm eines Röntgenbildverstärkers dargestellt, der beispielsweise aus einer dünnen Glasscheibe bestehen kann. Auf den Träger 1 ist ein in ein Bindemittel 2 eingebetteter Leuchtstoff 3 aufgebracht. Die Leuchtstoffschicht 2, 3 ist durch eine dünne Aluminiumschicht 4 abgedeckt, die eine Reflexion des emittierten Lichtes an die andere Seite zum Träger 1 bewirkt.

Die Körner des Leuchtstoffes 3 können dabei, wie auf der linken Seite der FIG 1 dargestellt, unbeschichtet ("ungecoatet") oder, wie auf der rechten Seite dargestellt, mit einer sehr dünnen Schicht 5 aus Aluminium- oder Siliziumoxid ($Al_2O_3$ oder $SiO_2$) versehen ("gecoatet") sein.

Die Größe der Körner des Leuchtstoffes 3 können dabei die in FIG 2 dargestellte Verteilung aufweisen. Die mittlere Korngröße des Leuchtstoffes 3 soll zwischen 1,7 μm und 2,2 μm, beispielsweise um 2 μm, liegen. Nicht mehr als 15%, vorzugsweise 10%, der Körner des Leuchtstoffes 3 sollen größer als 3,5 μm sein. 85% bis 95%, vorzugsweise 90%, der Körner des Leuchtstoffes 3 sollen größer als 1,1 μm sein. Das bedeutet, daß etwa 5% bis 15% kleiner als 1,1 μm sind. Weiterhin weisen 95% bis 70% der Körner eine Größe zwischen 1,1 μm bis 3,5 μm auf. Die Häufigkeit der Korngrößen des Leuchtstoffes 3 kann dabei, wie dargestellt, die Form einer Gauß-Kurve aufweisen, deren Maximum beispielsweise bei der Korngröße von 1,85 μm liegt.

Die Leuchtstoffschicht 2, 3 ist nur wenige Mikrometer dick und weist eine gleichmässige Leuchtstoffverteilung mit hoher Packungsdichte auf. Als Leuchtstoffe lassen sich mit Terbium aktiviertes Yttriumtantalat

EP 0 446 588 B1

(YTaO$_4$:Tb), Lanthanoxisulfid (La$_2$O$_2$S:Tb) oder Gadoliniumoxisulfid (Gd$_2$O$_2$S:Tb) verwenden. Dabei weist Yttriumtantalat eine Dichte von 7,46 g/cm$^3$, Lanthanoxisulfid von 5,74 g/cm$^3$ und Gadoliniumoxisulfid von 7,5 g/cm$^3$ auf. Die Verwendung von Gadoliniumoxisulfid hat den Vorteil, daß die Wellenlänge der Hauptemission mit der von ZnCdS:Ag übereinstimmt, so daß bestehende optische Systeme nicht überarbeitet werden müssen.

Die Leuchtstoffschicht 2, 3 wird durch Sedimentation eines kieselsäurehaltigen Bindemittels, in das der Leuchtstoff eingegeben wird, auf den dünnen Träger 1 aus Glas aufgetragen. Zur Verhinderung einer Lichtrückkopplung zur Photokathode wird die Oberfläche der Leuchtstoffschicht 2, 3 mit der lichtdichten, aber für die energiereichen Elektronen aus der Photokathode durchlässigen dünnen Aluminiumschicht 4 überzogen.

Die Verbesserung der Bildschärfe und die Reduzierung des ortsfesten Kornrauschens durch den Einsatz dieser Leuchtstoffe im Vergleich zu ZnCdS:Ag-Leuchtstoff (P20) mit einer Dichte von 4,13 g/cm$^3$ wurde an folgendem Beispiel demonstriert:

Die Elektronenenergie beträgt 25 keV. Verglichen werden die Kenndaten "Bildschärfe", d.h. die Modulationsübertragungsfunktion bei der Ortsfrequenz 60 lp/mm (MTF 60 lp/mm), und die Körnigkeit der Ausgangsschirme. Die Körnigkeit ist eine Kennzahl zur Charakterisierung des Rauschverhaltens in der Leuchtstoffschicht. Dabei wird die örtliche Lichtausbeute, das Meßsignal, längs einer Meßstrecke (Abtastweg) bestimmt und durch eine Fourier-Reihe dargestellt. Durch Summation der Quadrate der Fourier-Koeffizienten im Frequenzbereich zwischen 1 P/mm und 70 P/mm und anschließende Wurzelbildung wird die Kenngröße Körnigkeit ermittelt. Je größer der Wert für die Körnigkeit ist, umso stärker ist das ortsfeste Rauschen des Ausgangsschirmes. Die Kenndaten des Gd$_2$O$_2$S:Tb-Ausgangsleuchtschirmes (Beispiel) und des ZnCdS:Ag-Ausgangsleuchtschirmes (Referenz) sind in folgender Tabelle wiedergegeben:

|  | Beispiel | Referenz |
|---|---|---|
| Belegung | 1,40 mg/cm² | 1,10 mg/cm² |
| MTF (60 lp/mm) | 0,40 | 0,25 |
| Körnigkeit | 0,50 % | 1,20 % |

(Die Körnigkeit ist als relative Schwankung (rms) der lokalen Sichtausbeute definiert).

Dieser Vergleich zeigt, daß der mit Gd$_2$O$_2$S:Tb beschichtete Ausgangsleuchtschirm eine verbesserte Bildschärfe und reduziertes Rauschen aufweist. Die höhere Belegung bewirkt, daß der Leuchtstoff oberhalb von 25 keV ein besseres Abbremsvermögen für Elektronen besitzt als der mit 1,1 mg/cm$^2$ belegte P20-Schirm mit ZnCdS:Ag.

Dadurch wird erreicht, daß das als Substrat verwendete Glas weniger Trübungen durch Elektronenbeschuß erfährt, so daß Ausgangsschirme mit diesem Leuchtstoff in der Lichtausbeute langzeitbeständiger sind. Der mit ZnCdS:Ag beschichtete Leuchtschirm kann deshalb dieses günstige Verhalten auch dann nicht ganz erhalten, wenn man ihn dicker belegt (z.B. 1,5 mg/cm$^2$). Bei dieser Belegung verschlechtert sich der MTF-Verlauf schon drastisch.

Der Leuchtstoff Gd$_2$O$_2$S:Tb (P43) ist auch deutlich unempfindlicher gegenüber Schädigung durch Kathodenstrahlen.

## Patentansprüche

1. Ausgangsleuchtschirm für einen Röntgenbildverstärker, der die von einer Photokathode ausgehenden Photoelektronen in ein sichtbares Bild umsetzt, mit einem Träger (1), auf dem ein in ein Bindemittel (2) eingebetteter Leuchtstoff (3) aufgebracht ist, **dadurch gekennzeichnet,**
daß der Leuchtstoff (3) aus einem Leuchtstoff mit hoher Dichte von >5 g/cm$^3$ besteht.

2. Ausgangsleuchtschirm nach Anspruch 1, **dadurch gekennzeichnet,** daß der Leuchtstoff (3) aus Yttriumtantalat (YTaO$_4$) besteht.

3. Ausgangsleuchtschirm nach Anspruch 1, **dadurch gekennzeichnet,** daß der Leuchtstoff (3) aus Lanthanoxisulfid (La$_2$O$_2$S) besteht.

4. Ausgangsleuchtschirm nach Anspruch 1, **dadurch gekennzeichnet,** daß der Leuchtstoff (3) aus Gadoliniumoxisulfid (Gd$_2$O$_2$S) besteht.

3

EP 0 446 588 B1

5. Ausgangsleuchtschirm nach einem der Ansprüche 1 bis 4, **dadurch gekennzeichnet,** daß der Leuchtstoff (3) mit Terbium (Tb) dotiert ist.

6. Ausgangsleuchtschirm nach einem der Ansprüche 1 bis 5, **dadurch gekennzeichnet,** daß die mittlere Korngröße des Leuchtstoffes (3) zwischen 1,7 μm und 2,2 μm liegt, wobei nicht mehr als 15%, vorzugsweise 10%, der Körner des Leuchtstoffes (3) größer als 3,5 μm und 85% bis 95%, vorzugsweise 90%, größer als 1,1 μm sind.

7. Ausgangsleuchtschirm nach einem der Ansprüche 1 bis 6, **dadurch gekennzeichnet,** daß die Leuchtstoffschicht (2, 3) durch eine Aluminiumschicht (4) abgedeckt ist.

8. Ausgangsleuchtschirm nach einem der Ansprüche 1 bis 7, **dadurch gekennzeichnet,** daß die Körner des Leuchtstoffes (3) mit einer Schicht (5) aus Aluminium- oder Siliziumoxid ($Al_2O_3$ oder $SiO_2$) versehen sind.

## Claims

1. Luminescent output screen for an X-ray image intensifier which converts the photoelectrons originating from a photocathode into a visible image, having a carrier (1) to which a luminescent material (3) embedded into a binding agent (2) is applied, characterised in that the luminescent material (3) consists of a luminescent material which has a high density of > 5 g/cm$^3$.

2. Luminescent output screen according to claim 1, characterised in that the luminescent material (3) consists of yttrium tantalate ($YTaO_4$).

3. Luminescent output screen according to claim 1, characterised in that the luminescent material (3) consists of lanthanum oxysulphide ($La_2O_2S$).

4. Luminescent output screen according to claim 1, characterised in that the luminescent material (3) consists of gadolinium oxysulphide ($Gd_2O_2S$).

5. Luminescent output screen according to one of the claims 1 to 4, characterised in that the luminescent material (3) is doped with terbium (Tb).

6. Luminescent output screen according to one of the claims 1 to 5, characterised in that the average grain size of the luminescent material (3) lies between 1.7 μm and 2.2 μm, with not more than 15%, preferably 10%, of the grains of the luminescent material (3) being greater than 3.5 μm and with 85% to 95%, preferably 90%, being greater than 1.1 μm.

7. Luminescent output screen according to one of the claims 1 to 6, characterised in that the layer of luminescent material (2, 3) is covered by a layer of aluminium (4).

8. Luminescent output screen according to one of the claims 1 to 7, characterised in that the grains of the luminescent material (3) are provided with a layer (5) of aluminium oxide or silicon oxide ($Al_2O_3$ or $SiO_2$).

## Revendications

1. Écran luminescent de sortie pour un amplificateur de brillance radiologique, qui convertit des photoélectrons émis par une photocathode, en une image visible, comportant un support (1), sur lequel est déposée une substance luminescente (3) enrobée dans un liant (2), caractérisé par le fait que la substance luminescente (3) est constituée par une substance luminescente possédant une densité élevée > 5 g/cm$^3$.

2. Écran luminescent de sortie suivant la revendication 1, caractérisé par le fait que la substance luminescente (3) est constituée de tantalate d'yttrium ($YTAO_4$).

3. Écran luminescent de sortie suivant la revendication 1, caractérisé par le fait que la substance luminescente (3) est constituée d'oxysulfure de lanthane ($La_2O_2S$).

4

4. Écran luminescent de sortie suivant la revendication 1, caractérisé par le fait que la substance luminescente (3) est constituée par de l'oxysulfure de gadolinium ($Gd_2O_2S$).

5. Écran luminescent de sortie suivant l'une des revendications 1 à 4, caractérisé par le fait que la substance luminescente (3) est dopée par du terbium (Tb).

6. Écran luminescent de sortie suivant l'une des revendications 1 à 5, caractérisé par le fait que la taille moyenne des grains de la substance luminescente (3) est comprise entre 1,7 mm et 2,2 mm et pas plus de 15 % et de préférence 10 % des grains de la substance luminescente (3) ont une taille supérieure à 3,5 mm, et 85 % à 95 % et de préférence 90 % ont une taille supérieure à 1,1 mm.

7. Écran luminescent de sortie suivant l'une des revendications 1 à 6, caractérisé par le fait que la couche de substance luminescente (2,3) est recouverte par une couche d'aluminium (4).

8. Écran luminescent de sortie suivant l'une des revendications 1 à 7, caractérisé par le fait que les grains de la substance luminescente (3) sont recouverts d'une couche (5) d'oxyde d'aluminium ou de silicium ($Al_2O_3$ ou $SiO_2$).

FIG 1

FIG 2